Europäisches Patentamt

European Patent Office

Office européen des brevets

(11) Publication number: **0 087 854**
**B1**

# EUROPEAN PATENT SPECIFICATION

(45) Date of publication of patent specification: **18.06.86**

(21) Application number: **83300179.5**

(22) Date of filing: **13.01.83**

(51) Int. Cl.⁴: **B 29 D 23/18**

(54) **Chainless mold drive for a corrugator or the like.**

(30) Priority: **21.01.82 US 341556**

(43) Date of publication of application:
**07.09.83 Bulletin 83/36**

(45) Publication of the grant of the patent:
**18.06.86 Bulletin 86/25**

(84) Designated Contracting States:
**DE FR GB IT NL**

(56) References cited:
**EP-A-0 005 104**
**EP-A-0 007 556**
**CA-A- 902 314**
**CH-A- 417 930**
**DE-A-1 479 172**
**FR-A-2 430 837**
**US-A-2 866 230**
**US-A-3 999 925**
**US-A-4 021 178**

(73) Proprietor: **Lupke, Manfred Arno Alfred**
**35 Ironshield Crescent**
**Thornhill Ontario (CA)**
(73) Proprietor: **Lupke, Gerd Paul Heinrich**
**46 Stornoway Crescent**
**Thornhill Ontario (CA)**

(72) Inventor: **Lupke, Manfred Arno Alfred**
**35 Ironshield Crescent**
**Thornhill Ontario (CA)**
Inventor: **Lupke, Gerd Paul Heinrich**
**46 Stornoway Crescent**
**Thornhill Ontario (CA)**

(74) Representative: **Westwood, Edgar Bruce et al**
**STEVENS, HEWLETT & PERKINS**
**5, Quality Court Chancery Lane**
**London WC2A 1HZ (GB)**

## Description

The present invention relates to a thermoplastic tube producing apparatus comprising two trains of mold sections each train including circulating independent mold sections travelling in an endless path comprising a forward run wherein said sections of both trains co-operate to form a mold cavity for the thermoplastic tube.

An apparatus of this type is known, for example, from US—A—3,981,663; in this apparatus, the mold sections in each train are linked by endless chains, which form part of the mold section driving and circulation system.

In another apparatus of this type disclosed in US—A—4,021,178 in which the endless path includes in addition a return run and fixed transfer tracks for transferring the mold sections between the forward and return runs, the transfer tracks together with the forward and return runs are formed by guide channels configured to define the desired endless path, and each mold section has track engaging means comprising front and rear guide rollers which travel in the guide channels. The guide rollers are continuously engaged within the guide channels throughout the entire path of movement of the mold sections and can exhibit a tendency to jamming and wear. The mold sections are pushed along the guide channels by providing the sections with racks that mesh with rotatable gears at the beginning and end of the forward run.

The present invention relates to improvements in apparatus of this type.

Accordingly the present invention provides a thermoplastic tube producing apparatus comprising two trains of mold sections each train including circulating independent mold sections travelling in an endless path comprising a forward run wherein said sections of both trains co-operate to form a mold cavity for the thermoplastic tube, a return run, fixed transfer tracks for transferring said sections between said forward and return runs, and track engaging means comprising at least one pair of opposed rollers for engaging said transfer tracks so as to support and guide the mold sections along the transfer tracks, characterized by the rotatable transfer means installed in the centre of said fixed tracks and including a pair of opposed sprockets mounted on a shaft and meshing with said rollers to avoid jamming and wear in said transfer tracks, and a rotor mounted on said shaft between said sprockets for operatively engaging in guide means of the mold sections to ensure transverse alignment of the mold sections with the forward and return runs.

Endless chains are thus eliminated, also eliminating any chain supports and related equipment. The installation and removal of mold sections is also made easier by the absence of chains.

In preferred embodiments, the tracks are undercut rails and the track engaging means are mating channels.

The fixed rails and channels may be constructed with minimal play and with a large contact area to avoid wear due to high bearing loads.

The mold sections are individually transferred between the forward and return runs by the rotatable transfer means. The use of transfer means avoids jamming and wear at the ends of the forward and return runs.

The chainless drive allows the use of a quick-return system along the return run of each train of mold sections. With such a system, the total number of mold sections can be reduced considerably. One quick return system that may be employed is an endless belt extending along the return run so as to engage mold sections as they are transferred from the forward run and drive them along the return run track at a speed greater than the mold speed along the forward run.

In the accompanying drawings, which illustrate exemplary embodiments of the present invention:—

Figure 1 is a side elevation of an apparatus for producing thermoplastic tube;

Figure 2 is a section along line 2—2 of Figure 1;

Figure 3 is a section along line 3—3 of Figure 1;

Figure 4 is a section along line 4—4 of Figure 3;

Figure 5 is an exploded view of a mold section;

Figure 6 is a partial side elevation of an alternative embodiment of the tube producing apparatus;

Figure 7 is a view along line 7—7 of Figure 6;

Figure 8 is a view like Figure 2 showing another embodiment with internal mold cooling;

Figure 9 is a plan view of a mold section for use in the embodiment of Figure 8; and

Figure 10 is an end elevation of the mold section of Figure 9.

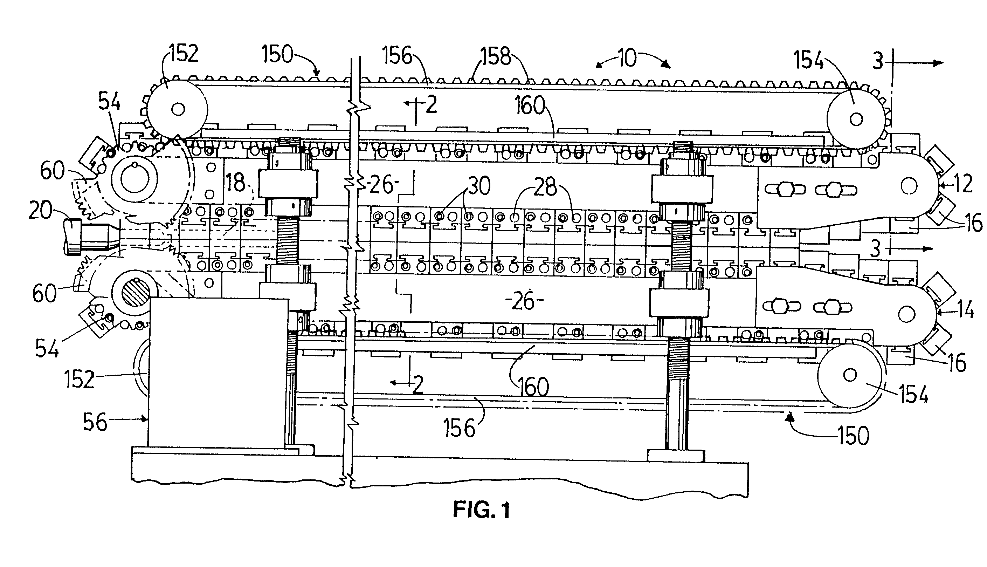

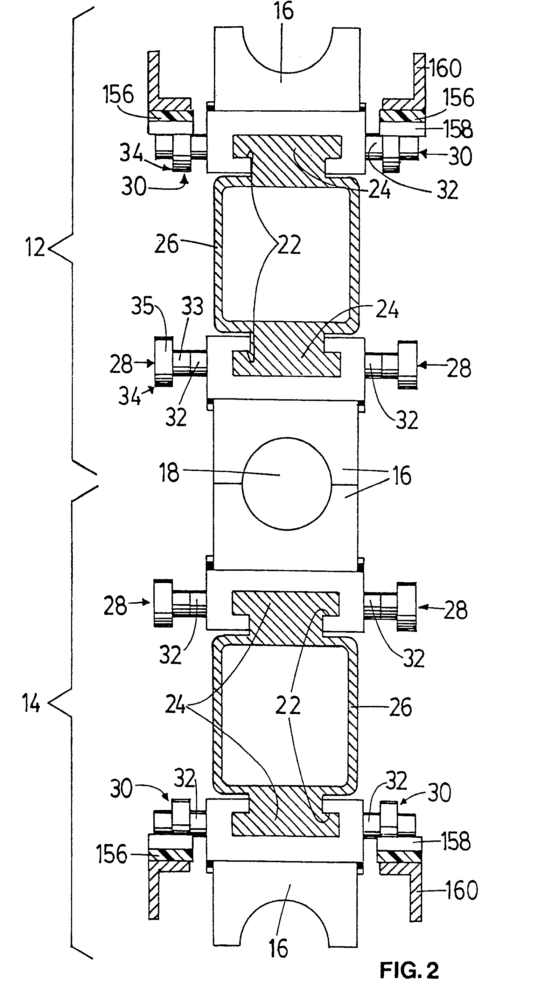

Referring to the drawings, and most particularly to Figure 1 and 2, there is illustrated an apparatus 10 for producing thermoplastic tube. The apparatus illustrated is of the type known as a "corrugator" as it is frequently used to produce corrugated tube.

The apparatus 10 includes two trains 12 and 14 of mold sections 16 that circulate on respective paths and that co-operate along a forward run to provide a travelling mold cavity 18. An extruder die 20 extrudes a tube of thermoplastic material into the mold cavity 18 where it is molded by blow or vacuum forming to provide the required tube.

The mold sections 16 are unconnected. That is, the mold sections are not linked to one another as by chains. As illustrated in Figure 2, each mold section has an undercut channel 22 in its inner face. The channel mates with a complimentary undercut rail 24. The apparatus includes four such rails, running along the upper and lower sides of two beams 26 to define the forward and return runs of the two mold section paths. The channels 22 and rails 24 are a close fit so that the mold sections may slide along the rails while maintaining a fixed orientation with precision. The relatively wide rails and channels provide a large bearing surface, thus minimizing wear. The rails may be of tool steel, and each channel may have a liner of similar material to ensure an indefinite lifetime for those parts.

To ensure proper transfer of each mold section between the forward and return runs of its path, the apparatus is equipped with a mold section guiding and transfer means at the end of each forward and return run. This is illustrated most particularly in Figures 2 through 5.

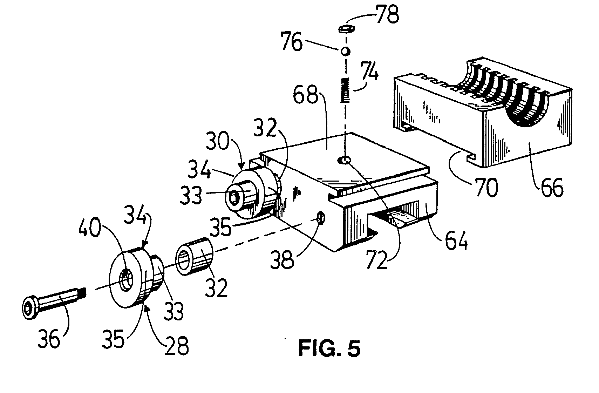

Each of the mold sections 16 carries a pair of leading rollers 28 and a pair of trailing rollers 30, with the rollers of each pair projecting from opposite sides of the mold section. As is most clearly shown in Figure 5, each roller has an inner section 32 and an outer section 34 that are independently rotable on a cap screw 36 threaded into a bore 38 in the mold section. The head of the cap screw is recessed into a counterbore 40 in the outer roller section 34.

The inner sections 32 of all of the rollers 28 and 30 are identical. They may conveniently be chain rollers of an appropriate size. The outer section of each roller has a small end 33 of the same diameter as the inner roller section 32 and a large diameter end 35. The leading rollers 28 are assembled with the large ends outermost, and the trailing rollers 30 are assembled with the small ends outermost, as shown in Figures 2, 3 and 5.

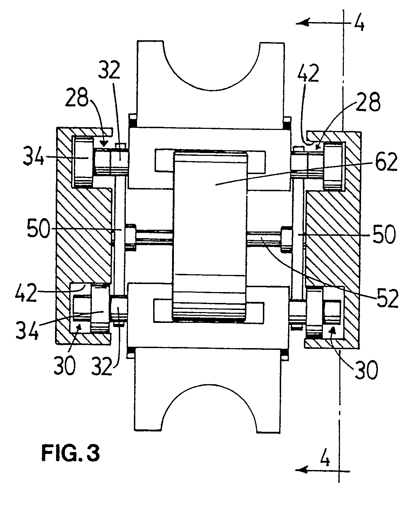

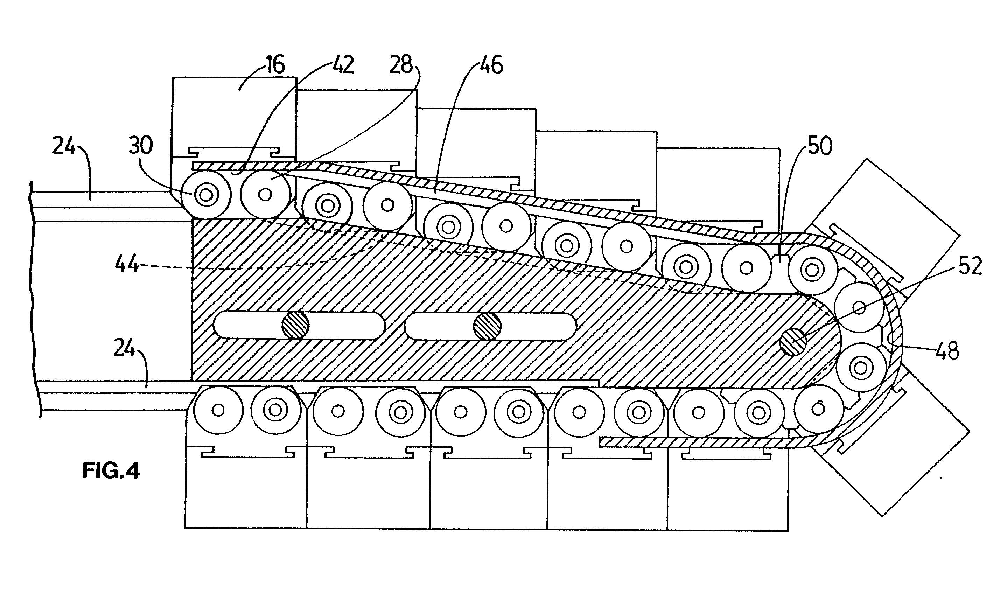

As shown in Figures 3 and 4, at the end of each forward run, the rollers 28 and 30 engage in transfer tracks 42 on either side of the apparatus. Just downstream of this engagement, the rail 24 ends, and each track 42 separates into an upstream inner section 44 and a downstream outer section 46, both of which slope away from the mold cavity 18. The two sections are parallel but horizontally offset. Track sections 44 are positioned inside the large ends 35 of the outer sections 34 of the leading rollers 28, so that as the mold sections travel downstream, the leading rollers travel downstream until they reach sections 46 and enter those sections at the same time that the large ends 35 of trailing rollers 30 enter the inner track sections 44. As the rollers of a mold section progress along the track sections 44 and 46, the mold section is drawn away from the formed tube without a change in its orientation relative to the tube. Where the mold sections have been fully withdrawn from the tube, the track sections 44 and 46 rejoin and guide the rollers through a curved track section 48 to the rail 24 of the return run.

As the rollers 28 and 30 enter the curved track section, they engage idler sprockets 50 carried on a shaft 52 on opposite sides of the mold section path. The mold sections are pushed from behind along their forward runs and as the leading rollers 28 of a mold section engage the sprockets 50, they act to rotate the sprockets, which in turn advance preceding mold sections around to the return run. As shown in Figure 4, each mold section is out of engagement with the adjacent mold sections as it is transferred by the sprockets 50. As a mold section 16 leaves sprockets 50, it is pushed by the sprockets along the return run and in turn pushes the preceding mold section along that run.

As shown in Figure 1, similar transfer means 10 are provided to transfer mold sections from the return runs to the upstream ends of the forward runs. The sprockets 54 of those transfer means are driven by motor 56 through a chain drive and synchronizing gears 60.

To ensure transverse alignment of the mold sections with the rails 24 as they leave the sprockets 50 or 54, a rotor 62 is mounted centrally between the sprockets of each pair to engage in the channel 22 of the mold sections.

Along each return run, between the downstream and upstream transfer means, the apparatus has a quick return drive for the mold sections. As shown in Figures 1 and 2, each quick return drive 150 includes a pair of upstream sheaves 152 on either side of the return run adjacent sprockets 54 and a pair of downstream sheaves 154 on opposite sides of the return run adjacent the downstream transfer means. The sheaves 152 and 154 on each side of the machine carry a belt 156 with cleats or teeth 158 along its outer face.

The sheaves are positioned so that the cleats 158 engage the rollers 28 and 30 along the return run of the mold sections. The belt is backed by a flange 160 mounted on the machine frame to prevent undesired deflection of the belt.

In operation, one of the pairs of sheaves 152 or 154 is driven to advance the mold sections along their return runs at a speed greater than the mold speed along the forward run. This spaces the mold sections along the return run, so that fewer mold sections are required than without the quick return system.

Figure 5 illustrates the construction of a two-part mold section 16. The mold section includes a carrier 64 and a mold block 66. The carrier has a transverse key formation 68 on its outer face, while the mold block has a mating keyway 70. To retain the mold block in an operative position on the carrier the carrier is bored at 72 to receive a coil spring 74, a ball 76 and a ball retainer 78. In use, the ball projects slightly from the outer face of the key 68 to engage in a corresponding recess (not shown) in the base of keyway 70. The application of sufficient lateral force on the mold block will displace the ball 74 into the bore 72 against the force of the spring 74. This releases the mold block and allows its removal from the carrier.

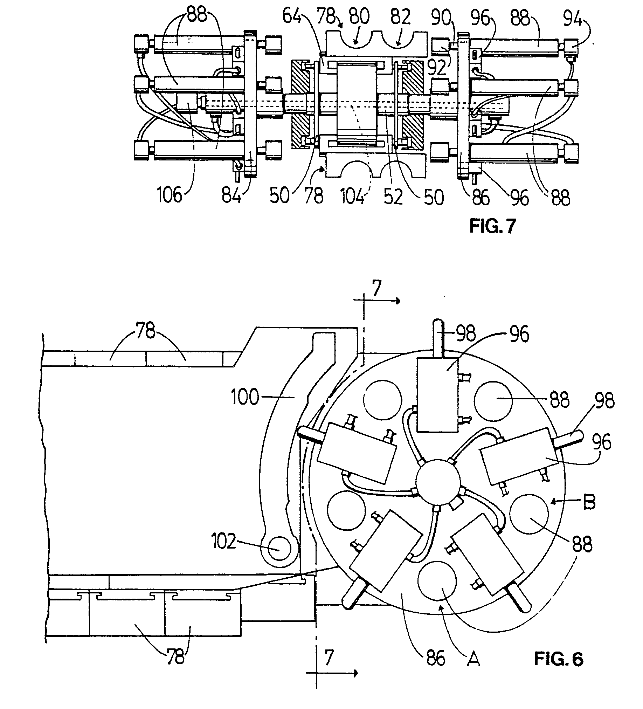

Figures 6 and 7 illustrate an embodiment of the apparatus which has mold blocks 78 with two transversely spaced half molds 80 and 82 that are of different configurations. For example, one may be corrugated and the other smooth. The mold block 78 may be displaced on the carrier 64 betwen two operative positions in which respective ones of the mold halves are in operative positions forming part of the mold cavity 18.

A mold block displacement means is provided to displace the mold blocks 78 between their operative positions. This includes two rotors 84 and 86 on opposite sides of each mold section path. The rotors are mounted on the sprocket shaft 52 for rotation with the sprockets 50. Each rotor carries a set of five actuators 88 with the actuators so arranged relative to the sprocket teeth that they are aligned laterally with the mold blocks as the mold blocks are transferred from their forward runs to their return runs.

Each actuator is a double acting pneumatic cylinder with its piston rod 90 parallel to the shaft 52 and extending through the associated rotor towards the mold blocks. A bumper 92 of protective material, for example rubber or plastics material, is mounted on the end of the piston rod.

The outer end of each cylinder is connected to a quick exhaust valve 94. The valve 94 and the outer end of the cylinder are connected to the respective outlet ports of a two-way valve 96 that is also mounted on the rotor. One valve 96 is provided for each of the cylinders 88. Each of the valves 96 is mounted so that its spindle 98 projects from the rotor. A valve actuating arm 100 is mounted on a pivot 102 adjacent the rotor and is movable between an operative position shown in Figure 6, where it engages the valve spindles 98 as they rotate with the rotor and an inoperative position retracted to avoid that engagement. Engaging a spindle with the arm 100 actuates the valve to supply air under pressure to the outer end of the associated cylinder 88, thus to extend the piston rod of the cylinder to engage a mold block 78 confronted by the cylinder 88 and to displace the mold block laterally. On one rotor, the positioning of the valves 96 with respect to their associated cylinders 88, is such that the associated cylinder is pressurized to extend its piston rod when the cylinder passes the position designated A in Figure 6. On the other rotor, the cylinder is pressurized to extend its piston rod when the cylinder passes the position designated B in Figure 6.

To provide for selective operation of the cylinders, the arm 100 is normally biassed away from engagement with the spindles 98 and is connected to a solenoid (not shown) that projects the arm into its spindle engaging operative position.

To supply air to the valves 96 there is an air passage 104 along the centre of the shaft 52. The inlet of each valve is connected to the air passage and at one end of the shaft a rotary union 106 supplies air under pressure to the passage.

In operation, the arms 100 are displaced to their operative positions at selected times to operate selected valves 96 and their associated cylinders 88. When a cylinder 88 is operated, its piston rod 90 extends and engages the adjacent mold block 78 to shift the mold block to the operative position closest to the opposite side of the apparatus. Since the two half molds 80 and 82 of the mold block have different profiles, for example corrugated and smooth, appropriate selection of the mold block positions, yields a wide variety of different tube configurations that can be produced without stopping the machine to exchange mold blocks.

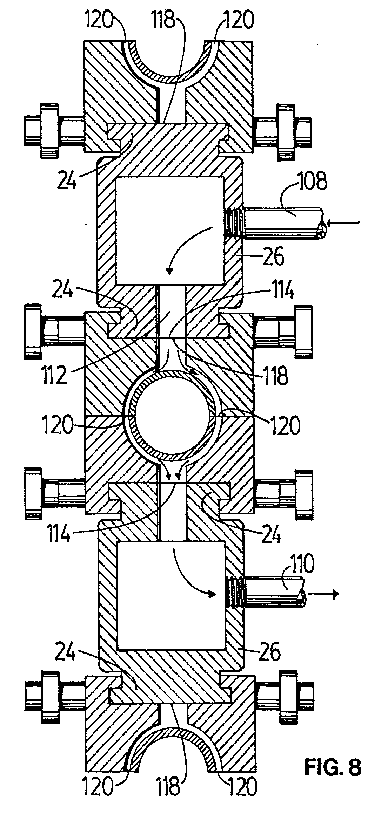

Figures 8, 9 and 10 illustrate a further embodiment of the apparatus that provides for internal cooling of the mold blocks. As illustrated in Figure 8, the beams 26 are hollow and are equipped with fluid couplings 108 and 110. The rails 24 along the forward runs of the mold sections have coolant passages 112 leading from the interiors of the associated beams 26 to ports 114 in the major faces of the rails. Each of the mold sections 16 has a fluid passage leading from a port 118 in the base of channel 22, around the mold cavity 18 to ports 120 at the outer face of the mold section. The ports 118 are positioned to come into alignment with the port 114 as the mold sections travel along the rails 24. The ports 120 of each mold section align with the corresponding ports of a corresponding section in the other train of mold sections.

In use, coolant is supplied through coupling 108 to the interior of the upper beam 24. The beam acts as a header to distribute the coolant via passages 112 and ports 114 to the passages 116 in the mold sections. The coolant then passes through the passages 116 of the corresponding section in the other train of mold sections to the lower beam 26 for withdrawal through coupling 110.

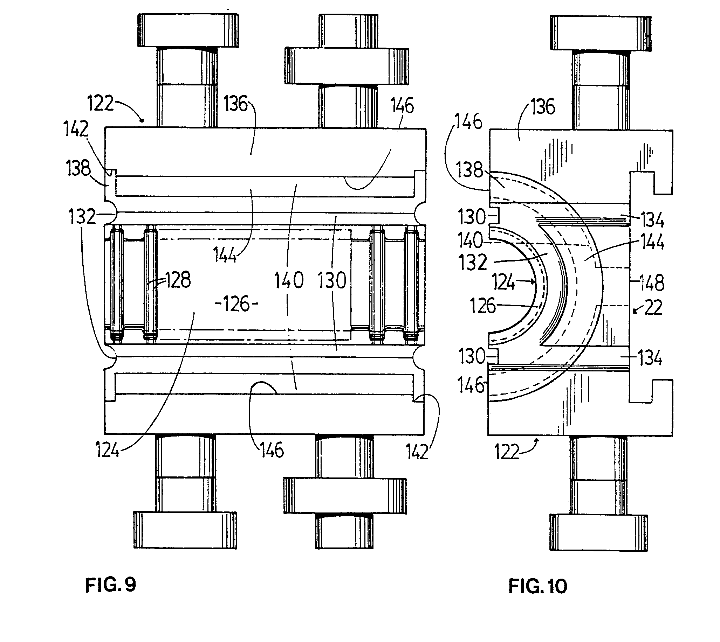

Figures 9 and 10 illustrate an internally cooled mold section that is vented to allow air escape when blow molding or air withdrawal for vaccum forming. The mold block 122 has a liner 124 with a corrugated molding face 126 for molding corrugated pipe. Grooves 128 extend along the base of each corrugation and communicate with channels 130 along opposite sides of the molding face. The ends of channel 130 communicate with semicircular grooves 132 in the end faces of the mold block. Additional grooves 134 in the end faces extend from the grooves 132 to the base of the mold block channel 22. These grooves 134 may be vented or connected to a vacuum source by appropriate passages (not shown) in the mating guide rails. In other embodiments, the grooves 132 may be vented to other faces of the mold block that are exposed along the forward run.

The mold block liner 124 fits into a body 136. The liner is of semi-cylindrical form and has end flanges 138. It contains the molding face 126, grooves 128, channels 130, grooves 132 and portions of the grooves 134. The body 136 of the mold block has a semi-cylindrical recess 140 along its inner face and arcuate grooves 142 along the end faces to receive the edges of the liner flanges 138. When the body and liner are fitted together, there is a semi-cylindrical chamber 144 between the body and liner, closed at the ends by flanges 138 and opening at 146 to the outer face of the mold block. The chamber also communicates with port 148 in the base of channel 26.

In a train of abutting mold blocks, the channels 130 align to form a pair of continuous channels the length of the mold cavity, the grooves 132 of abutting mold blocks co-operate to form a manifold surrounding the mold cavity and the grooves 134 form closed passages communicating with the manifold.

In use the chamber 144 serves as a coolant jacket communicating with the coolant outlets in the adjacent beam 26 via port 148 and with the coolant jacket of the corresponding moldblock of the other train via openings 146. Air between the tube being formed and the molding face of the block is vented or withdrawn under suction through grooves 134.

The coolant may be air, or some other gas or liquid. Air is particularly advantageous since the heated air can be discharged to the atmosphere, while other gases and liquids generally have to be re-cycled. Additionally, air leakage does not create unclean or dangerous conditions, as may be the case with liquids or other gases.

While certain embodiments of the invention have been described in detail, it is to be understood that other embodiments are possible within the scope of the present invention. For example, while the tracks and track engaging means have been described as being of T-shaped cross section, other cross sectional shapes are suitable. One example is a dove tail shape. It is also possible to use other forms of track, for example a channel. In the mold section guiding and transfer means, the outer roller sections may be of different diameters rather than lengths, with appropriately sized track sections. In one embodiment, the outer rollers are all constituted by identical elements, each with a small diameter and a large diameter end. The leading rollers are arranged with their large diameter ends outermost while the trailing rollers are inverted and have their small diameter ends outermost.

## Claim

A thermoplastic tube producing apparatus comprising two trains of mold sections, each train including circulating independent mold sections (16) travelling in an endless path comprising a forward run wherein said sections (16) of both trains co-operate to form a mold cavity (18) for the thermoplastic tube, a return run, fixed transfer tracks (42) for transferring said sections (16) between said forward and return runs, and track engaging means comprising at least one pair of opposed rollers (28, 30) for engaging said transfer tracks (42) so as to support and guide the mold sections (16) along the transfer tracks, characterised by said rotatable transfer means (50, 52, 62) installed in the centre of said fixed tracks and including a pair of opposed sprockets (50) mounted on a shaft (52) and meshing with said rollers (28, 30) to avoid jamming and wear in said transfer tracks, and a rotor (62) mounted on said shaft (52) between said sprockets (50) for operatively engaging in guide means (22) of the mold sections (16) to ensure transverse alignment of the mold sections with the forward and return runs.

## Patentanspruch

Vorrichtung zur Herstellung thermoplastischer Rohre mit zwei Zügen von Teilformen, wobei jeder Zug zirkulierende, unabhängige Teilformen (16) aufweist, die in einem endlosen Weg laufen, der aus einer Vorlaufstrecke, in der die Teilformen (16) beider Züge zusammenwirken, um eine Hohlform (18) für das thermoplastische Rohr zu bilden, einer Rücklaufstrecke, festen Laufschienen (42) zum Transport der Teilformen (16) zwischen der Vorlauf- und der Rücklauf-Strecke, und Schieneneingriffseinrichtungen, die aus wengistens einem Paar entgegengesetzter Rollen (28, 30) zum Eingriff in die Laufschienen (42) bestehen, so daß die Teilformen (16) längs der Laufschienen abgestützt und geführt werden, gekennzeichnet durch eine drehbare Transfereinrichtung (50, 52, 62), die in der Mitte der festen Schienen installiert ist und ein Paar entgegengesetzter Kettenräder (50) aufweist, die auf eine Welle (52) montiert sind und mit den Rollen (28, 30) kämmen um ein Verklemmen und Abnutzung in den Laufschienen zu vermeiden, und ein Rotor (62) der auf die Welle (52) zwischen die Kettenräder (50) montiert ist, um betrieblich in die Führungseinrichtung (22) der Teilformen (16) einzugreifen, so daß eine Querausfluchtung der Teilformen mit der Vorlauf- und der Rücklauf-Strecke gewährleistet wird.

## Revendication

Dispositif pour la réalisation d'un tube thermoplastique, comprenant deux trains de sections de moules, chaque train ayant des sections de moules indépendantes en circulation (16), se déplaçant selon un trajet sans fin qui comprend un brin se dirigeant vers l'avant, dans lequel lesdites sections (16) des deux trains coopérant de manière à former une cavité de moule (18) pour le tube thermoplastique, un brin de retour, des voies de transfert fixes (42), pour transférer lesdites sections (16) entre ledit brin se dirigeant vers l'avant et le brin de retour, et des moyens venant en prise avec les voies, qui comprennent au moins une paire de rouleaux opposés (28, 30) pour venir en prise avec lesdites voies de transfert (42), de manière à supporter et à guider les sections de moule (16) le long des voies de transfert, caractérisé par des moyens de transfert rotatifs (50, 52, 62) placés au centre desdites voies fixes et comprenant une paire de roues à chaîne opposées (50), montées sur un arbre (52) et qui sont en prise avec les rouleaux (28, 30) de manière à éviter tout blocage et toute usure des voies de transfert, et un rotor (62), monté sur ledit arbre (52), entre lesdites roues à chaîne (50), pour venir en prise, en fonctionnement, avec des moyens de guidage (22) des sections de moule (16), afin d'obtenir un alignement transversal des sections de moule avec les brins se dirigeant vers l'avant et le retour.

FIG. 1

FIG. 2

FIG. 3

FIG.4

**FIG. 5**

FIG. 7

FIG. 6

FIG. 8

FIG. 9

FIG. 10